# EUROPEAN PATENT APPLICATION

(11) **EP 1 840 474 A2**
(43) Date of publication of application: **03.10.2007**
(21) Application number: 07006297.1
(22) Date of filing: 27.03.2007
(51) Int. Cl.: F24D 17/00, F24H 9/12, F24J 2/34

(54) **Kit for solar water heating system**

(30) Priority: 29.03.2006 US 787448 P; 05.02.2007 US 899698 P
(71) Applicant: Fafco Incorporated, Chico CA 95928 (US)
(72) Inventor: Rubio, Michael Robert, Chico, California 95973 (US); Aronson, Nathan Anders, Chico, California 95926 (US); Maligie, William Albert, Chico, California 95926 (US)
(74) Representative: Browne, Robin Forsythe

(57) **Abstract**

Solar water heating systems that are formed as all-in-one kits that include all the components necessary for assembling the solar water heating systems at a chosen site is disclosed. Depending on the desired system, the kit may for example include a solar collector, one or more supplemental storage tanks, pumps, heat exchangers, valves, fittings, piping, timers, insulation, flashings, hose bibs, supports, brackets, fasteners, sealants and/or the like. In fact, the kit may further include all or some of the necessary tools required to assemble the solar water heating system.

## Description

### BACKGROUND OF THE INVENTION

### 1. Field of the Invention

The present invention relates generally to improvements of solar water heating systems. In one aspect, the present invention relates to solar water heating systems formed as a kit. In another aspect, an improved tank adapter is described.

### 2. Description of the Related Art

Solar heater systems are designed to capture heat from the sun and to store the solar heat until the heat is needed. In solar water heaters, the heat is ultimately transferred to water. Solar water heaters, which typically include a collector and storage tank, come in various forms including both active and passive systems.

In active systems, the collector is typically a flat plate collector, which includes a rectangle box, tubes that extend through the box and a transparent cover that covers the box. The tubes help capture heat and transfer the heat to water inside the tubes. A pump is used to circulate water from a storage tank through the collector and back to the storage tank (typically located in the house). The pump essentially pumps the hot water from the collector into the tank and the colder water out of the tank and into the collector. The pump is typically controlled by a control system that activates the pump when the temperature in the collector is higher than the temperature in the storage tank. The control system may also deactivate the pump when the temperature in the collector is lower than the temperature in the storage tank. In some cases, the storage tank may double as a hot water heater in order to back up the solar heating, i.e., it can heat the water when the temperature of the water in the collector is low. One advantage of active systems is that they provide better control of the system and therefore they can be operated more efficiently than other systems. Furthermore, using the control system, active systems can be configured to protect the collector from freezing in colder climates.

In passive systems, the heated water is moved via natural convection or city water pressure rather than using pumps. Although passive systems are generally less efficient than active systems, the passive approach is simple and economical. Compared to active systems, the passive system does not require controls, pumps, sensors or other mechanical components and therefore it is less expensive to operate and further it requires little or no maintenance over its lifetime. Passive systems come in various forms including batch and thermosiphon systems.

Batch systems such as breadbox solar water heaters or integrated collector storage systems are thought of as the simplest of all conventional solar water heaters. In batch systems, the storage tank is built into or integrated with the collector, i.e., a self-contained system that serves as a solar collector and a storage tank. Batch systems typically consist of one or more storage tanks, which are disposed in an insulated enclosure having a transparent cover on one side. The side of the storage tanks facing the transparent cover is generally colored black to better absorb solar energy. Batch systems use water pressure from the city source (or well) to move water through the system. Each time a hot water tap is opened, heated water from the storage tank is delivered directly to the point of use or indirectly through an auxiliary tank (e.g., hot water heater). One advantage of batch systems is that the water does not have to be stored separately from the collector. Furthermore, due to the large mass storage, batch systems typically do not encounter freezing problems in colder climates.

Thermosiphon systems, on the other hand, include a flat plate collector and a separate storage tank. The flat plate collector may be similar to the flat plate collector used in the active system. However, unlike the active system, the storage tank is mounted above the collector to provide natural gravity flow of water, i.e., the heated water rises through the collector to the highest point in the system (e.g., top of storage tank) and the heavier cold water in the storage tank sinks to the lowest point in the system (e.g., bottom of collector) thereby displacing the lighter heated water. Most literature on the subject discusses placing the storage tank at least 18 inches above the collector in order to prevent reverse thermosiphoning at night when the temperatures are cooler.

Unfortunately, systems such as these suffer from several drawbacks. For one, most systems are bulky devices formed from large, awkward and heavy parts and therefore they are difficult to manage and install. This is especially true on roofs and for do it yourselfers with limited support. In some cases, due to the weight of the system, the roof underneath the system must be made more structurally sound. Furthermore, because these systems are large and heavy, the costs of shipping these products are exorbitantly high. In fact, in some cases, the cost of shipping may be higher than the cost of the product itself. Another drawback with these systems is that they tend not to be aesthetically pleasing.

### SUMMARY OF THE INVENTION

In one aspect, the invention relates generally to solar water heating kits that are packaged in a single box that may be readily shipped using ordinary package carriers (e.g., UPS, Fed Ex, DHL, etc.). Generally, the kit is intended to include components that are necessary to form a solar water heating system. The components of the kit will vary based on the nature of the solar water heating system that is to be built. In some implementations, the kit includes at least one flexible solar collector panel, an interface module that includes a heat exchanger, and a piping system for coupling the solar panel to the interface module, and for coupling the interface module to a storage tank that is not part of the kit. The size of the collector panels and the amount of piping that are included may be widely varied in accordance with the needs of a particular design. Typically, the kit would include at least 20 square feet of usable collector surface area and at least 40 feet of flexible tubing, although larger collector areas are generally preferred.

In some embodiments, instructions for assembling a solar water heating system are also included in the kit. The shipping box is preferably sized to conform with a relatively low cost shipping standard such as the OS2 shipping standard.

The components of the kit may be widely varied based on the specifications of the system being built. For example, in some applications, the interface module takes the form of a single unit that includes a one or two pumps. The kit may include components such as a control unit, a tank adapter, multiple flexible collector panels, a drain back tank and/or other suitable components. In some implementations where flexible piping is readily available to the purchasers, the flexible piping may be omitted from the kit.

In another aspect of the invention, a tank adapter suitable for coupling a solar water heating system to a storage tank such as a domestic hot water tank is described. In this embodiment, the tank adapter includes an integrally formed plastic body having at least three connection points and at least who isolated fluid passages. One end of both the first and second passages both through a single (first) connection point that is adapted to mate with a single tank port. The other ends of the passages open through different connection points.

In some embodiments, the tank adapter further includes an extension tube that is fluidly coupled to the first conduit passage and extends beyond the first connection point so that when the tank adapter is coupled to a tank, the inlet of the second conduit passage is substantially at the first connection point and the outlet of the first conduit passage may be positioned within the tank at a location that is physically separated from the inlet of the second conduit passage. The extension tube may be integrally formed with the plastic body or may be formed from a separate component. By way of example, the tank adapter may be formed via an injection molding process.

### BRIEF DESCRIPTION OF THE DRAWINGS

The invention will be readily understood by the following detailed description in conjunction with the accompanying drawings, wherein like reference numerals designate like structural elements, and in which:
Fig. 1 is a diagram of a solar water heating system, in accordance with one embodiment of the present invention.
Fig. 2 is a diagram showing a single boxed kit, in accordance with one embodiment of the present invention.
Fig. 3 is a diagram of a solar water heating system formed from a kit in accordance with one embodiment of the present invention.
Fig. 4 is a diagram of a solar panel, in accordance with one embodiment of the present invention.
Figs. 5A and 5B are diagrams showing a coupling arrangement, in accordance with one embodiment of the present invention.
Fig. 6A is a diagram showing a collector in an extended form and Fig. 6B is a diagram showing the collector rolled up and ready to be placed inside a box, in accordance with one embodiment of the present invention.
Fig. 7 is a diagram of a roof jack, in accordance with one embodiment of the present invention.
Fig. 8 is a simplified diagram of a tank adapter, in accordance with one embodiment of the present invention.
Figs. 9A-9B are various diagrams illustrating a compact tank adapter, in accordance with one embodiment of the present invention.
Figs. 10A-10F are various diagrams illustrating a compact tank adapter, in accordance with one embodiment of the present invention.
Figs 11A-11C show various alternate tank adapter arrangements, in accordance with several alternate embodiments of the invention.
Fig.12 is a diagram showing a tank adapter coupled to a hot water heater, in accordance with one embodiment of the invention.
Fig. 13 is a perspective diagram of a drain back tank, in accordance with one embodiment of the present invention.
Fig. 14 is a diagram of a control module in accordance with one embodiment of the present invention.
Fig. 15 is a diagram of a packaging arrangement for a solar system kit, in accordance with one embodiment of the present invention.
Fig. 16 is a chart showing a parts list for a solar system kit, in accordance with one embodiment of the present invention.

### DETAILED DESCRIPTION OF THE INVENTION

The invention pertains to improvements for solar water heating systems such as active direct systems, active indirect systems, passive direct systems, passive indirect systems and the like. The improvements are primarily related to reducing cost, increasing performance, ease of installation, ease of manufacture and ease and cost of shipping.

One aspect of the invention relates to solar water heating systems that are formed as all-in-one kits that include all the components necessary for assembling the solar water heating systems at a chosen site. Depending on the desired system, the kit may for example include a solar collector, one or more supplemental storage tanks, pumps, heat exchangers, valves, fittings, piping, timers, insulation, flashings, hose bibs, supports, brackets, fasteners, sealants and/or the like. In fact, the kit may further include all or some of the necessary tools required to assemble the solar water heating system.

In most cases, the all-in-one kit uses highly compact or compactable components that are lightweight and that can be easily coupled together to form the solar water heating system. As a result, the solar water heating system can be easily installed by professional installers or alternatively by do-it-yourselfers (DIYers). In addition, the parts can be optimized for peak solar performance. Furthermore, all the components of the system may be configured to fit entirely into a single box thereby reducing storage space and shipping costs. In fact, the entire boxed all-in-one kit may be configured to conform to standard shipping sizes and weights as for example OS2.

The kit may for example utilize components that can be folded, bended or rolled into a compact form for packaging and that can be rolled or spread out during installation. The kit may also utilize integrally formed components or single components with multiple functionality thereby helping decrease the overall size. The kit may also utilize collapsible components that can be broken down for packaging and assembled together during installation. The kit may also utilize components that can be coupled together, assembled and/or installed without tools or with basic household tools so that the installer is not required to make a one use tool purchase. The kit may also utilize components that can be coupled together, assembled and/or installed without much experience. For example, the system may be designed so that it can be assembled without using soldered copper joints. The kit may also utilize configurable and modular components with standard fittings so that system can be configured for different uses (e.g., different user loads).

Another aspect of the invention relates to solar water heating systems that include components formed from plastic materials. Plastic materials offer many advantages over materials traditionally used in solar water heating systems such as copper, glass and the like. Plastic materials are lightweight, low cost, and easy to manufacture. Furthermore, they can be formed into almost any shape thereby allowing unique parts to be created that either provide additional functionality and/or can be made smaller. In some cases, plastic parts can be made flexible or bendable thus lending themselves to compactness as discussed above as well as allowing the parts to conform to their surroundings. In one embodiment, a majority of the components are formed from plastic. By way of example, and not by way of limitation the solar collector, housings, piping, fittings, valves, flashings, hose bibs, supports, brackets, fasteners, and/or the like may be formed from plastic materials.

To provide some specific examples, the solar collector can be formed entirely or substantially from plastic materials. Additionally or alternatively, the piping can be formed entirely or substantially from plastic materials (no copper piping is needed). By way of example, PEX tubing or other similar plastic tubing may be used as the conduit between the solar collector on the roof and the rest of the system located within the house. Additionally or alternatively, the fittings can be formed entirely or substantially from plastic materials. For example, the fittings that connect the piping to the solar collector as well as the fittings that couple the piping to storage tanks.

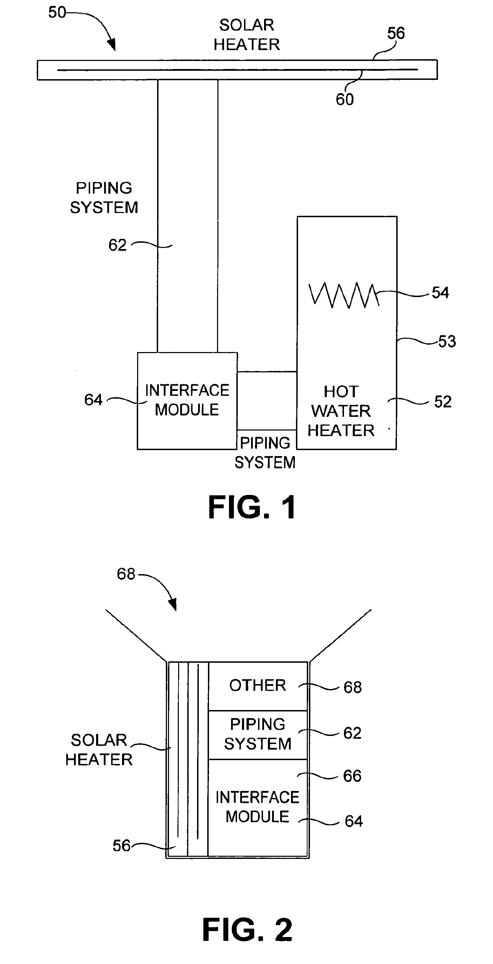

These and other embodiments of the invention are discussed below with reference to Figs. 1-16. However, those skilled in the art will readily appreciate that the detailed description given herein with respect to these figures is for explanatory purposes as the invention extends beyond these limited embodiments.

Fig. 1 is a diagram of a solar water heating system 50, in accordance with one embodiment of the present invention. In most cases, the solar water heating system 50 is configured to supplement an existing hot water heater 52 that comprises a storage tank 53 and heater means 54. However, it should be noted that in some cases, the solar water heating system 50 may be a stand-alone system and thus may include its own storage tank and possibly a heater means. By way of example, in two tank systems, the solar water heating system preheats water in a secondary tank before it enters the conventional water heater tank. In one tank systems, the conventional water heater tank is the only storage tank. Generally speaking, the solar water heating system 50 supplies hot fluid for the purpose of heating water stored in a storage tank such as the storage tank 53 of the hot water heater 52. The heated water stored in the storage tank can be distributed to a point of use as for example when a hot water tap is opened.

The solar water heating system 50 generally includes two major components: 1) a solar heater 56 configured to capture solar energy, and 2) a circulation system 58 configured to move a fluid between the solar collector and a storage tank (e.g., storage tank 53).

The solar heater 56 generally includes one or more solar collectors 60 that capture solar heat from the sun and transfers the solar heat to a fluid contained inside the solar collector 60. For example, during the daytime, the sun heats up the surface of the collectors 60 and the walls pass this heat to the fluid contained inside the collectors 60. In most cases, the collectors 60 include one or more channels or conduits that act as passageways for moving the fluid through the collectors 60. Furthermore, the collectors 60 may be formed from a dark color such as black so as to absorb a greater amount of the sun's energy.

The collector can be widely varied. The type of collector used generally depends on the desired needs of the system. Examples of solar collectors include flat plate collector, integral collector-storage systems, and evacuated-tube solar collectors. Flat plate collectors typically include an absorber that can be glazed or unglazed. Flat plate collectors may also include an enclosure or they may be enclosureless. Integral collectors also known as ICS or batch systems feature one or more tanks contained within an enclosure which is typically glazed. Evacuated-tube collectors feature parallel rows of tubes containing an outer transparent tube and an inner absorber tube.

The circulation system 58 generally includes a piping system 62 and an interface module 64. The piping system 62 provides a physical conduit between the solar heater 54 and storage tank(s). The piping system 62 may for example include a cold inlet pipe and a hot outlet pipe. The interface module 64, on the other hand, provides a means for interfacing the fluid contained in the collector 60 with the fluid contained in the storage tank 53. Depending on the system configuration, the interface module can be widely varied. The interface module may enable passive or active systems. Furthermore, the interface module may enable direct circulation (open loop) or indirect circulation (closed loop).

In passive systems, the interface module includes various valves but no pumps. The heated water is moved via natural convection or city water pressure rather than using pumps. Passive systems come in various forms including batch and thermosiphon. In thermosiphon systems, heated water rises through the collector to the highest point in the system and the heavier cold water sinks to the lowest point in the system. Often times, an additional storage tank is needed. In conventional thermosiphoning systems the storage tank is placed above the collector. However, alternative designs may be used as for example those described in U.S. Patent No. 11/097, 983, which is herein incorporated by reference.

In active systems, the interface module includes one or more pumps, valves, and controllers that circulate water or other heat transfer fluid through the collector(s). The interface module may also include one or more temperature sensors that interact with the controller. When direct circulation is provided in active systems, the pumps circulate water from a storage tank through the collector and back to the storage tank. The pump pumps the hot water from the collector into the tank and the cold water out of the tank and into the collector. When indirect circulation is provided in active systems, the pumps circulate a heat transfer fluid through the collectors and a heat exchanger. A pump may also circulate water from the storage tank through the heat exchanger. The heat exchanger transfers the heat from the heat transfer fluid to the water as it circulates through the heat exchanger. When water is used as the heat transfer fluid on the collector side, the interface module may further include a drain back tank.

In accordance with one embodiment, the solar water heating system is configured as an all in one kit. Conventionally, system installers have been required to piece together the system from individual parts and parts from different suppliers. This takes time, and may suffer from integration and performance problems due to variations from different suppliers, and lack of testing for optimal results. The kit overcomes these drawbacks as the parts are designed for one another, and if standard parts are used they are selected for peak performance (e.g., based on testing).

The all-in-one kit is configured to include at least the solar heater including any parts associated therewith, and the circulation system including any parts associated therewith. By way of example, the solar heater can include a solar collector, but may also include headers, glazings, enclosures, etc. Furthermore, the circulation system can include the piping, the various components of the interface module such as valves, pumps and controller, and any fittings necessary for coupling all the components together. The all in one kit may also optionally include additional parts such as storage tanks, mounting hardware, and/or the like.

To further enhance the kit, the components of the system can be designed to fit into a single box 66 thereby forming a single boxed kit 68 as shown in Fig. 2. In fact, in one embodiment, the boxed up kit 68 is configured to conform to specifications governing oversized shipping boxes so as to eliminate freight shipping where costs can be exorbitantly high. Both Fed Ex and UPS classify long or large, but somewhat lightweight boxes as oversized. Although these oversized boxes are more expensive to ship than standard normal size boxes they are many times less expensive than freight shipping since they can be shipped via normal ground and air delivery. Boxes can be classified as OS1, OS2 or OS3.

At the time of this writing, for UPS, OS1 is a package with a combined length and girth that exceeds 84 inches, and a combined length and girth that is equal to or less than 108 inches, and actual weight is less than 30 pounds. For each OS1 package, the billable weight is 30 pounds. OS2 is a package with a combined length and girth that exceeds 108 inches and actual weight is less than 70 pounds. For each OS2 package, the billable weight is 70 pounds. OS3 package is a package with a combined length and girth that exceeds 130 inches, and a combined length and girth equal to or less than 165 inches, and actual weight less than 90 pounds. For each OS3 package, the billable weight is 90 pounds.

Also at the time of this writing, for FedEx, OS1 is a package with a combined length and girth that exceeds 84 inches, and a combined length and girth that is equal to or less than 108 inches, and actual weight is less than 30 pounds. For each OS1 package, the billable weight is 30 pounds. OS2 is a package with a combined length and girth that exceeds 108 inches and actual weight is less than 50 pounds. For each OS2 package, the billable weight is 50 pounds. OS3 package is a package with a combined length and girth that exceeds 130 inches, and actual weight less than 90 pounds. For each OS3 package, the billable weight is 90 pounds.

In order to have the kit conform to at least one of these standards, the various components can be configured to be light weight, integrated, compact, collapsible, foldable, rollable and/or the like. The components may even be configured to nest relative to each other to reduce volume inside the box 66.

In one embodiment, the solar collector 60 may be a flexible solar collector. The flexible collector is capable of being rolled up thereby reducing its space requirement inside the box. In fact, the collector area to package volume can be significantly increased by rolling the collector up. Furthermore, the collectors 60 may be modular so that multiple collectors can be included in the kit. This may be somewhat analogous to being collapsible. Additionally or alternatively, the piping 62 may be formed from flexible tubing. Like the solar collector 60, the piping 62 can therefore be rolled up thereby reducing its space requirement inside the box 66. Additionally or alternatively, in active systems, the pumps and heat exchanger associated with the interface module 64 can be integrated together into a single compact module that is contained in a single housing. Additionally or alternatively, in passive systems, storage tanks situated on the roof with the collectors 60 can be collapsible into smaller components. Additionally or alternatively, in active systems, a tank adapter used to expand a single connection point into multiple conduits can be integrally formed into a single compact part thereby significantly decreasing its size and impact within the box 66.

To further enhance the kit, the system 50 can be designed for easy handling and installation. For example, the components may be designed to come in standard shape and sizes with standard threads, fittings or couplings that can easily be plugged into one another with little effort and possibly no tools. If tools are required, then at least some of these tools can be included in the kit. In one example, the various plumbing connections are made with male stubs, push fittings or similar mechanisms. This allows a user to simply plug the appropriate parts together to form the entire system.

In accordance with another embodiment, at least some if not a majority of the components of the kit are formed from plastic materials. Plastic parts are low cost and easy to manufacture. Furthermore, they are lightweight when compared to traditional materials (e.g., glass and metal). By decreasing the weight, the collector is much easy to handle and assemble on a roof. In addition, the cost of shipping can be drastically reduced. Moreover, some plastic materials are flexible and bendable and thus the parts may be capable of achieving a more compact form for packaging thereby further reducing the cost of storage and shipping.

In one embodiment, the solar collector 60 is formed entirely or substantially from plastic materials. For example, the absorber, glazing and/or enclosures may be formed from plastic materials. In another embodiment, the piping 62 is formed entirely or substantially from plastic materials. For example, the fittings, pipes or tubes, and/or similar parts may be formed form plastic materials. In cases where flashings, and additional storage tanks are included, these parts may also be formed from plastic materials. Housings for various elements as for example pumps and heat exchangers may also be formed from plastic materials.

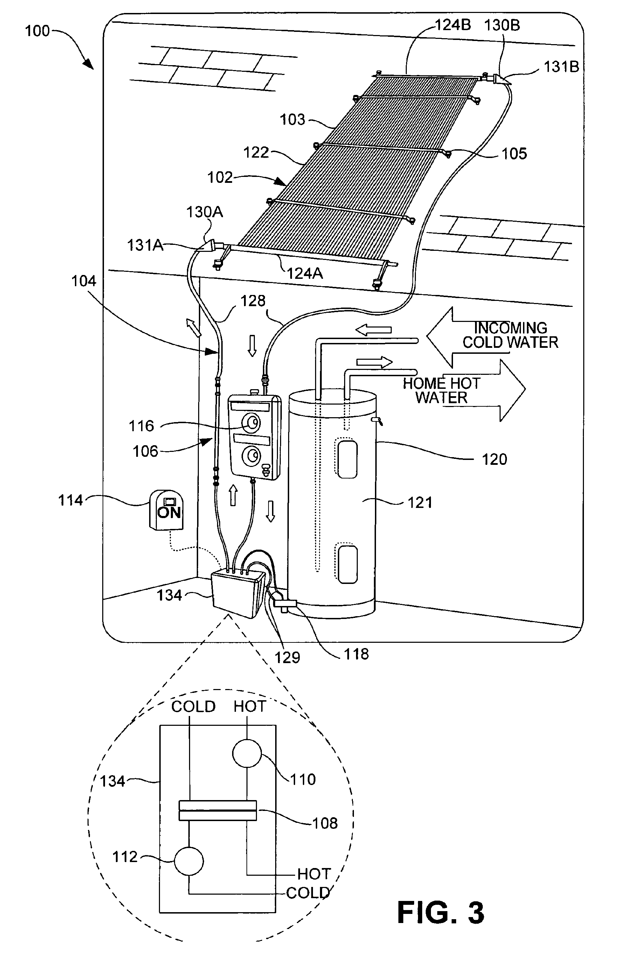

Fig. 3 is a diagram of a solar water heating system kit 100, in accordance with one embodiment of the present invention. Although solar water heating systems can be widely varied as indicated above, in this particular embodiment, the system is directed at an active indirect system. Thus, the solar water heating system kit 100 generally includes a solar heater 102, which can be mounted on a roof, and a circulation system 104 including at least piping system 106, heat exchanger 108, pumps 110 and 112 and a controller 114. The system kit 100 may additionally include a drain back tank 116 for freeze protection (among others) and a tank adapter 118 for interfacing with an existing hot water heater 120.

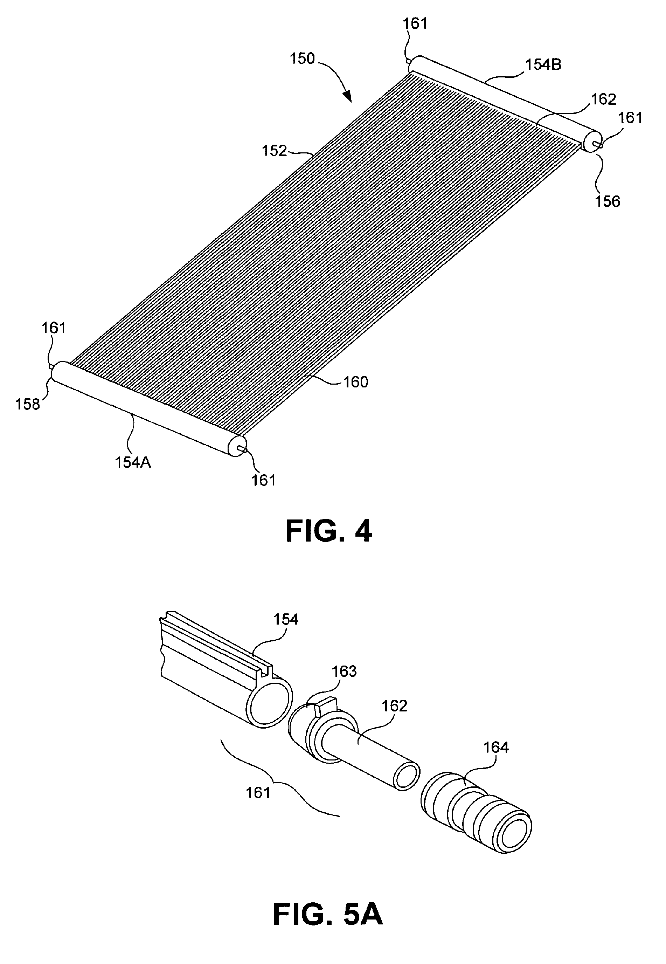

The solar heater 102 includes one or more solar collectors 103, each of which includes an absorber 122 and a pair of headers 124. The absorber 122 is configured to capture solar heat from the sun and to transfer the solar heat to the fluid inside the absorber 122. The bottom header 124A is configured to receive and temporarily hold incoming cold fluid. The top header 124B is configured to temporarily hold and help deliver outgoing hot fluid. If multiple collectors are used they can be connected simply by fluidly connecting the top headers together and the bottom headers together. By way of example, a simple fitting 126 may be used between each set of headers 124A and 124B. This chain can be continued until the desired collector area is achieved (collectors - n+1). In one embodiment, the solar collectors 103 are formed from flexible materials so that they can be rolled up into a compact form. By way of example, the solar collector may be an unglazed plastic flat plate collector. Examples of solar heaters are shown in Figs. 4-6.

The system 100 may additionally include mounting hardware 105 for mounting the solar heater to the roof. Various straps, clips, brackets may be used. In one embodiment, the mounting hardware include lag screws, one or more body straps for securing the absorber to the roof, one or more header straps for securing the headers to the roof, and possibly some sealant for covering the lag screws.

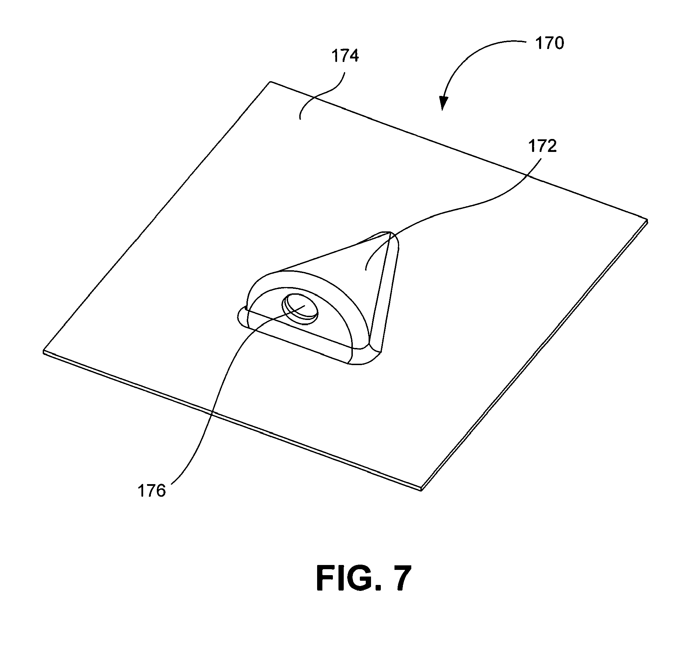

The piping system 106 includes a first set of pipes 128 that pass through a pair of roof openings 130A and 130B and that in conjunction with a first pump 110 circulates a heat transfer fluid such as water through the collectors 103, drain back tank 116 and a first side of the heat exchanger 108. The first set of pipes 128 may for example pass through the roof via roof jacks 131A and 131B. One example of a roof flashing is shown in Fig. 7.

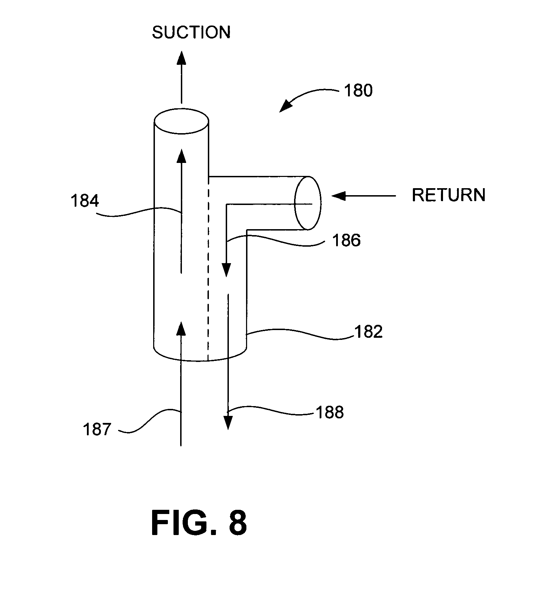

The piping system 106 also includes a second set of pipes 129 that in conjunction with a second pump 112 circulates water from a storage tank 121 of the hot water heater 120 through the heat exchanger 108 and back to the storage tank 121 of the hot water heater 120. The second set of pipes may for example correspond to flexible plumbing hoses. In some cases, the second set of pipes 129 may interface the storage tank 121 via a tank adapter 118. A tank adapter 118 allows cold and hot water to pass through the same opening in the storage tank 121. As should be appreciated, hot water heaters 120 typically only include a single connection point for access to the internal volume of its storage tank 121 (e.g., drain port). In one embodiment, the tank adapter is formed as a compact part with all of its various conduits at substantially the same location. In fact, in one implementation, the compact tank adapter is formed as a single integral member. In addition, the tank adapter may be configured to be about the size of a hand. Examples of tank adapters are shown in Figs. 8-12.

In one embodiment, at least the pipes 128 are formed from flexible materials so that they can be rolled up into a compact form. Furthermore, by being flexible, the path of the pipes on the roof as well as through the roof and house may be easily adjusted or laid out. This simply cannot be done with rigid piping such as copper and rigid plastic materials such as CPVC. By way of example, the pipes 128 may be formed from a flexible plastic material.

In one embodiment, the pipes 128 are embodied as PEX (cross linked polyethylene). PEX is composed of high density polyethylene which after undergoing a physical or chemical induced molecular change creates a product which is stable in higher temperatures yet remains flexible and chemically resistant to damage. PEX is also suitable for potable drinking water and is freeze break resistant which means it can expand to accommodate water that has frozen inside the tubing and contract to its original size when it thaws without damage to the tubing. Other benefits include faster installation, lower labor costs, and lower material costs. Installation typically requires very few fittings with no torches, solder flux or chemicals required to make the connections. PEX tubing is typically joined together using a fitting system that includes a copper crimp ring that is fitted in the ends of the tubes and crimped in place using a full circle crimp tool. The crimp tool may also be included in the kit. Push fittings may also be used to couple tubing together or to couple the tubing to other components including pumps, tanks, collectors, and the like. By way of example, ½ inch (copper tube size) having 5/8 inch outside diameter PEX tubing manufactured from Watts may be used. Furthermore, polysulfone push fittings manufactured by Seatech may be used.

Unfortunately, PEX tubing may degrade over time due to sun exposure (UV). Therefore, the PEX tubing that is situated in direct sun may include a coating, paint, tape or outer sheath to protect it from the sun's rays. In one implementation, the kit includes a roll of UV resistant 12 mil tape that can be applied to the portions of the PEX tubing that would otherwise be exposed. Because two roof penetrations are used, the length of exposed PEX can be kept to a minimum as for example less than 12 inches. Alternatively, the PEX tubing may be covered with a UV resistant PE thin wall tubing. Alternatively, the PEX tubing may be covered and insulated with UV resistant elastomeric insulation. Alternatively, the PEX tubing may include a layer of UV resistant paint.

Alternatively or additionally, other plastic tubing materials may be used. The pipes may for example be formed from any of those plastic materials used to form the solar collector mentioned in Fig. 4 as they typically require similar characteristics such as the ability to withstand high temperatures and pressures. By way of example, the pipes may be formed from a family of plastics known as polyolefins. This may include for example polybutylene, polyethylene, polypropylene and polypropylene random copolymer (PPR). In one specific example, polypropylene tubing may be used instead of PEX tubing.

The amount of piping that is provided in the kit is typically associated with what is needed in a conventional home when installing a solar system on a roof. The length of tubing needs to cover that amount that runs along the roof and the amount that runs through the roof and various walls until it reaches its required destination proximate the hot water heater (x2 - cold and hot). By way of example, the length of rolled up tubing may be about 100 feet.

The system 100 may additionally include mounting hardware such as tubing support clips that support the tubing every 3 ft. and elbows that hold and bend the tubing at 90 degrees. A tubing cutter may also be included.

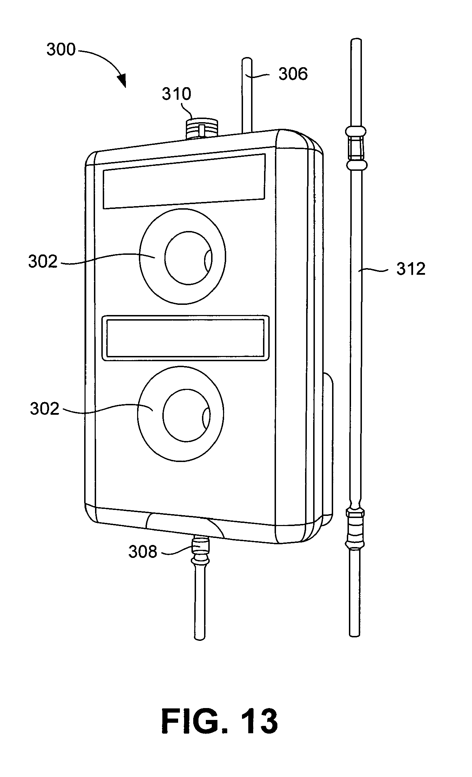

The drain back tank 116 and associated level 117 are disposed along the first set of pipes 128 between the collectors 103 and the heat exchanger 108. The drain back tank 116 provides a storage location where fluid inside the collector loop can drain when fluid is not circulating. In this system, the collectors 103 only have fluid in them when the first pump 110 is operating. This means that each night, there will be no fluids in the collector 103 that could possibly freeze or cool down and delay the start up of the system 100. This also protects the system 100 in case of a power failure that prevents the pump 110 from circulating water through the collector loop. One example of a drain back tank is shown in Fig. 13.

In the embodiment shown in Fig. 3, the fluids circulated into the collectors 103 are separated from the heated water of the hot water heater 120 by the heat exchanger 108. The heat exchanger should be configured to prevent contamination of the two loops. The heat exchanger is used to transfer heat from the fluids circulating through the collectors to the fluid circulating from the hot water heater. The fluids used in the collector loop can be widely varied. The fluids may be selected from water, oil, antifreeze, refrigerant, glycol, or the like. Often times, systems that utilize drain back tanks use distilled water as the heat transfer fluid circulating through the collector loop.

During operation, the solar controller 114 is configured to activate the first and second pumps 110 and 112 to provide circulation though the two loops. The first pump 110 is configured to pump hot water from the solar heater to the heat exchanger and cold water from the heat exchanger to the solar heater. The second pump 112 is configured to pump cold water from the hot water heater to the heat exchanger and hot water from the heat exchanger to the hot water heater. In some cases, the activation is controlled in accordance with temperature readings associated with a first sensor located at the hot water heater and a second sensor located at the collector. For example, the controller may receive temperature signals from the sensors and determine when the pumps 110 and 112 should be activated in order to move fluids through the system. This timer has easy to use controls and set operation. It also includes an astronomic feature that automatically adjusts for seasons, geographical locations, sunrise and sunset.

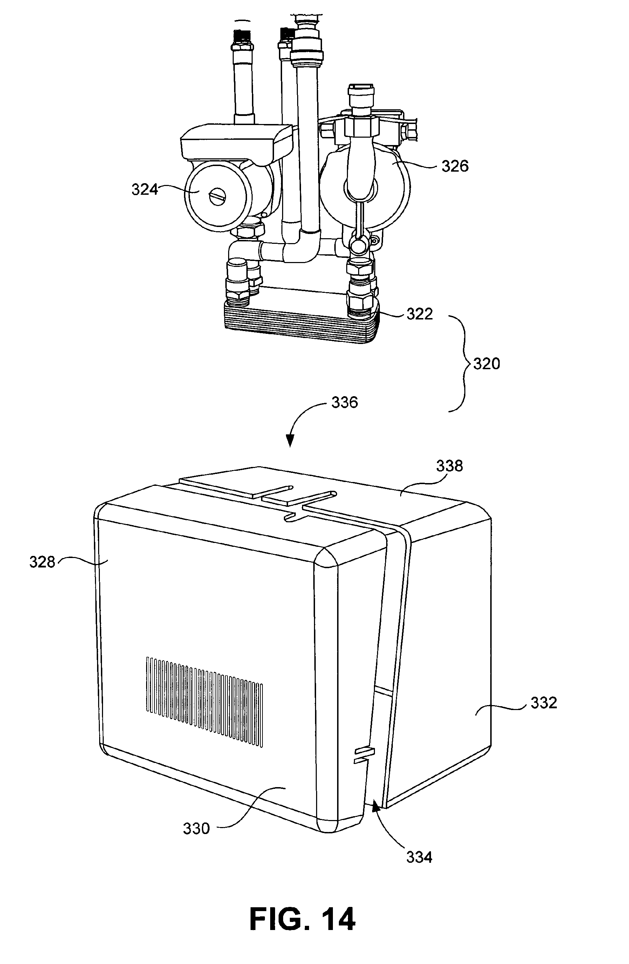

In one embodiment, the heat exchanger 108, pumps 110 and 112 are integrated into a single integrated circulation module 134. This allows for easy installation as the associated pipes are simply plugged into the heat exchanger and the pumps are operatively coupled to the solar controller 114 via a wired or wireless connection. In some cases, the single integrated circulation module may additionally include the drain back tank and the solar controller for increased integration. One example of a single integrated circulation module is shown in Fig. 14.

It should be appreciated that the kit is not limited by the components described, and may include additional components and in some cases fewer components depending on the kit. By way of example, the kit may be embodied without a drain back tank, or control module if the kit is directed towards a passive system. In addition, the kit may include other components such as fittings for making all the necessary fluid connections, hardware components for mounting the Drain back tank to a wall, as well as hoses, valves, and/or the like.

Add on kits may also be available. Add on kits are kits that supplement the basic component of the system 100. They may be included together in the same box or alternatively they may be packaged in separate boxes. This generally depends on their size and weight. By way of example, a second tank can be added on for additional solar water storage. This is particularly useful for large households or where large draws of water are taken every day. In this example, the cold water supply is connected to the solar storage tank, and the outlet of the solar storage tank is connected to the inlet of the electric or gas water heater. Additionally or alternatively, additional solar collectors and associated drain back tanks if needed may be available as add-on kits. Additional union push fittings may be included in the add-on kit to connect the added solar collector(s). Additionally or alternatively an anti scalding valve may be provided through an add-on kit. This type of valve protects users against accidental scalding hot water getting to your faucets.

In one embodiment, the only tools that may be required of an installer are a drill, 1" hole cutter, socket driver, and a screwdriver for the drill.

Fig. 4 is a diagram of a solar panel 150, in accordance with one embodiment of the present invention. The solar panel 150 may for example correspond to the solar collector described in Fig. 3.

As shown, the solar panel 150 includes an absorber 152 and a pair of headers 154. The headers 154, which are positioned at opposite ends of the absorber 152, tend to be parallel with one another and substantially perpendicular to the absorber 152. The bottom header 154 fluidly couples to the bottom end of the absorber 152 and the top header 154 fluidly couples to the top end of the absorber 152. Fluids may therefore pass between the headers 154 and the absorber 152.

The absorber 152 is configured to capture solar heat from the sun and to transfer the solar heat to a fluid inside the absorber 152. During the daytime, the sun heats up the surface of the absorber 152, and the walls pass this heat to the fluid contained inside the absorber 152. The absorber is typically black to maximize absorptivity in order to optimize amount of energy absorbed from the sun. The bottom header 154A, which provides minimal storage, is configured to receive and temporarily hold incoming cold water as for example from a city source, well or storage tank. The top header 154B, which also provides minimal storage, is configured to temporarily hold and help deliver outgoing hot water as for example to an auxiliary tank or a point of use. In one embodiment, the solar panel operates under low pressure (0-8psi) and relative low temperature (150 F max).

In accordance with one embodiment, the absorber 152 and headers 154 are formed from plastic materials. In some cases, they are formed from the same plastic material and in other cases they are formed from different plastic materials with similar properties. Plastic parts are low cost and easy to manufacture. Furthermore, they are lightweight when compared to traditional materials (e.g., glass and metal pipes). By decreasing the weight of the system, the system is much easier to assemble and install on a roof.

The components including the absorber and headers may for example be formed from a variety of suitable plastics including polyolefin's. This may include for example polybutylene, polyethylene, polypropylene and polypropylene random copolymer (PPR). Each of these has advantages and disadvantages that should be taken into account when designing the various components.

Unfortunately, because of the high heats and pressures associated with collectors especially those involved in domestic hot water heating, some plastic parts may have a tendency to degrade and/or fail. For example, the plastic parts may creep over time. As such, the components of the system such as the absorber, headers and/or storage tanks are formed from plastic materials that can withstand high temperatures and pressures, and more particularly from highly creep resistant plastic materials.

In one embodiment, the plastic material is selected to withstand pressures in the range of about 40 psi to about 100 psi (e.g., home water pressure) at temperatures of between about 120 degrees F to about 200 degrees (e.g., operating temperature of the collector). More particularly, the plastic material is selected to withstand pressures of at least 60 psi, at temperatures of at least about 160 degrees F. Even more particularly, the plastic material is preferably selected to withstand pressures of at least 80 psi at temperatures of at least about 180 degrees F. The plastic material may also be required to withstand these parameters for a select amount of time as for example a minimum of 10 years. Yet another requirement of the plastic material may be to withstand these parameters for a select dimension of the components as for example the diameter of the tubes associated with the collector/absorber (e.g., ¼-1/8 in.).

In one particular embodiment, polypropylene random copolymer (PPR) is used for at least the collector (absorber) since it has been found to work particularly well in the aforementioned system. It can also be used for the headers and storage tanks. In another particular embodiment, polybutylene is used for at least the collector (absorber) since it has also been found to work well. It can also be used for the headers.

In some embodiments, at least a portion of the various components are formed from the same plastic materials. For example, all the components may be formed from the same plastic material, or a subset of the components may be formed from the same plastic material while the remaining component may be formed from a different material. In another embodiment, the various components are all formed from different plastic materials. In yet another embodiment, each component may be formed from different materials. For example, the top header may be formed from a first material, and the bottom header may be formed from a second material. As should be appreciated, each part typically has different design considerations that are taken into account when selecting the appropriate plastic material.

In one example, the headers may be formed from polypropylene and the collector/absorber may be formed from polybutylene or polypropylene random copolymer (PPR). Glass filled polypropylene may also be used for the headers in this example.

It should be noted that the plastic materials mentioned above are not limited to only the embodiments described herein and may be applied to all types of solar collectors and their various parts. For example, due to their characteristics, polybutylene and polypropylene random copolymer (PPR) are well suited for uses in a wide variety of solar collectors and solar heater systems. As a result, their uses extend well beyond the collector systems described herein. Thus, an independent aspect of the invention is the use of polybutylene and polypropylene random copolymer (PPR) in plastic solar collector parts of virtually any type of solar collector or system.

Moving along, the top header 154B includes an outlet 156 for outputting heated fluid from the absorber 152 and the bottom header 154A includes an inlet 158 for receiving fluid that is cooler than the heated fluid. Although, the inlet 158 is shown at the bottom left, and the outlet 156 is shown at the top right, it should be noted that this is not limitation and that they may be placed at any point along the top of the absorber 150 including the opposite sides of the headers 154 or in the center of the headers 154.

The outlets and inlets may be widely varied, and may include various couplings for fluidly coupling inlet and outlet piping to the collector. In one embodiment, the outlets and inlets are embodied as male stubs that receive push fittings. Push fittings provide a secure fluid connection without needing tools. As a result, the collector can be installed with simplicity and ease. A user simply has to push the fitting over the male stub to make the connection. The male stubs may be integrally formed with the headers (molded) or they may be separate components that are attached to the headers (e.g., welded, glued or fused).

Furthermore, the headers 154 may be embodied as a large tube or pipe, and the absorber may be embodied as a panel having one or more individual channels or conduits 160. The channels 160 act as passageways for moving the fluid between the pair of headers 154. The channels 160, which may for example take the form of small tubes or pipes, are typically positioned together side by side (juxtaposed) in a parallel relationship to form a single absorber panel. The channels 160 may be connected with one another to form a single integrated piece (e.g., molded, glued, fused or welded) or they may be separate and distinct parts that are bundled together mechanically (e.g., clips or straps). In one implementation, individual free-floating tubes are clipped together. In another implementation, the individual tubes are welded together either entirely along their length or at spots. In another implementation, the tubes are formed by seam welding two sheets together. In yet another implementation, a single sheet is molded with a plurality of tubes.

Moreover, the absorber 152 may be integrally formed with the headers 154 (e.g., molded, fused, glued or welded) or it may be a separate piece of equipment that connects or couples to the headers (e.g., couplings or fittings). In either case, the headers 154 may include a manifold 162, which receives the channels 160 of the absorber 152, and which helps distribute the fluid between the absorbers 152 and the headers 154. In most cases, the manifold is integrally formed with the headers, and forms a recess within which the ends of the tubes are disposed, In one example, the tube ends of the absorber are attached to the manifold via welding so as to produce a permanent integrated structure consisting of the headers and the absorber.

The headers each include one or more openings inside the recess of the manifold that fluidly connect the recess and thus the tubes to a holding chamber of the headers. The holding chamber represents the area within which the fluid is held until a draw is taken. The opening in the header may be one continuous opening that extends the length of the header, or it may be segmented openings placed at various points along the length of the collector (e.g., holes). By way of example, the tubes of the absorber may be welded or fused onto the header pipes as described in U.S. Patent No. 6,038,768, which is herein incorporated by reference.

In one particular arrangement, shown by way of example and not by way of limitation, the absorber 152 is formed from individual small diameter plastic tubes 160 that are flexible and held together with one or more clips. In addition, the headers 154 are formed from large diameter plastic pipes that are substantially rigid and have a similar cross section in both shape and size. The ends of the small diameter plastic tubes are welded or fused with the large diameter headers 154 to form a single unified piece. The plastic material may for example be PPR.

In accordance with one embodiment, the solar panel is configured to work with both active and passive solar systems. That is, the solar panel is interchangeable between active and passive systems, i.e., it can be plugged into either system with limited to no adjustments. In active systems, a pump is used to circulate water from a storage tank through the solar panel and back to the storage tank (typically located in the house). In passive systems, the heated water is moved via natural convection or city water pressure rather than using pumps. Each time a hot water tap is opened, heated water from a storage tank coupled to the solar panel at its roof location is delivered directly to the point of use or indirectly through an auxiliary tank (e.g., hot water heater) via the pressure of the incoming city water. This feature presents a paradigm shift in the way that solar systems are put together as conventional collectors have been dedicated to either active or passive systems (e.g., only work with one system).

Not only is the solar panel 150 configured for both passive and active use, but it is also configured to be modular so that the overall solar heating system can be configured in a variety of ways. For example, the solar heating system that uses the solar panel can be configured for a variety of different user loads by adding additional solar panels and/or storage tanks. In order to achieve this, the solar panel may come in standard shapes and sizes, with standard threads, fittings or couplings, that can easily be plugged into other collectors and/or storage tanks with little effort and possibly no tools. The solar heating system can therefore be designed to more closely match the actual needs of the drawing system as well as to better fit within the design constraints of the environment in which the solar heating system is used.

As should be appreciated, conventional collectors typically only address the needs of one type of user. In contrast, the solar panel described herein used singularly or with additional collectors and/or storage tanks can be used to address the needs of many users. The solar panel is configured in a way to allow the user to customize the collector to storage ratio, which influences the response time of the system. If the ratio of storage to collector is high (more storage, less collector), the user will receive a lot of hot water at the end of the day. If the ratio of storage to collector is low (more collector, less storage), the user will receive small portions of hot water throughout the day. As should be appreciated, more collector area generally means that the systems response is quicker and hotter, but there tends not to be a lot of water stored. Because of the simplicity of the design, the customization can be performed during installation, i.e., add one or more storage tanks if a high storage to collector ratio is needed, add a second or third collector if a low storage to collector ratio is needed, etc.

In order to accomplish modularity, the solar panel 150 includes standard fittings 161 at the ends of the headers 154. The standard fittings are configured across all the components of the solar heating system so that the various parts such as multiple collectors and/or storage tanks can be easily connected to one another.

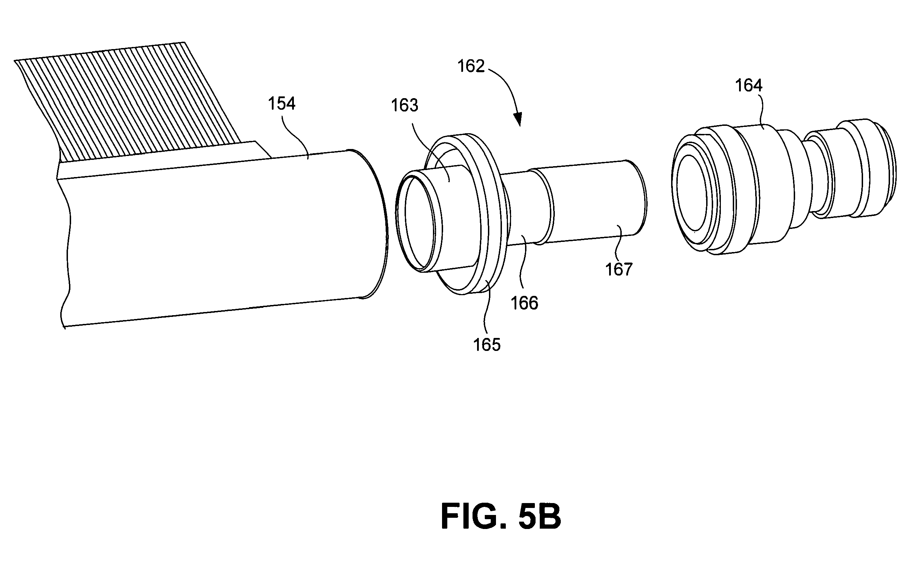

In one embodiment, as shown in Figs. 5A and 5B, the ends of each of the headers 154 includes a male stub 162 that receives a push fitting 164. The male stubs 162 may be formed with the headers 154 or they may be separate components that are attached to the headers 154 (as shown). For example, the male stubs 162 may include a base portion 163 that is dimension to fit within the open end of the header 154, and welded, glued, fused, threaded or otherwise attached to the header 154. The male stubs 162 may additionally include lip covers 165 that fit over the end of the header 154. The lip cover 165 may hide flash. Furthermore, the stub 162 may include a limit mark 166 to indicate when the push fitting 164 is properly installed, and chamfered edges 167 to prevent damaging o-rings associated with the push fittings 164.

In order to connect the male stub 162 to another male stub, as for example a male stub from another collector or possibly a storage tank, a separate push fitting 164 is used. The male stubs 162 are simply pushed into opposing ends of the push fitting 164 thereby securing and fluidly coupling the male stubs together. Alternatively, hoses or pipes can be used between a pair of push fittings if the various components do not exact align at the header ends. By way of example, PEX (Cross-linked Polyethylene) tubing may be used. Plugs may be used to close off an end of a header that is not desired to be connected to another component. Push fittings may also be used to couple the headers to hoses or tubes as for example cold and hot hoses or tubes (e.g., the cold tube may be coupled to one of the bottom headers via a male stub, and the hot tube may be coupled to one of the top headers via a male stub). By way of example ½ inch or ¾ inch male push fittings may be used.

Although push fittings are shown herein, it should be appreciated that this is by way for example and not by way of limitation. As should be appreciated, any suitable coupling arrangement may be used to connect multiple components together.

The dimensions of the solar panel can be configured in a variety of ways to allow for modularity. For example, they may come in standard sizes and/or in standard increments thereby making connections seamless. By way of example, the width of the solar panel may formed in 2 ft increments including 2 ft, 4 ft, 6 ft, 8 ft, 10 ft and 12 ft and so on, and the length may be formed in 2ft increments including 2 ft, 4 ft, 6 ft, 8 ft, 10 ft, 12 ft ... 20 ft, 22 ft, 24 ft and so on. By using standard sizes such as this, various panels can be connected to produce the desired shape and area of the solar collector. For example, two 2x12 panels may be combined to cover an area of 48 square feet. In many applications it is desirable for the kit to include at least 20 square feet or two square meters of collector area, or more preferably more than 40 square feet or four square meters.

In one implementation, the width of the solar panel is about 2 ft and length of the solar panel can be selected from 4 ft, 6 ft, 8 ft, 10 ft and 12 ft. In another implementation, the width of the solar panel can be selected from 4 ft, 6 ft, 8 ft, 10 ft and 12 ft and the length of the solar panel is about 2 ft. As should be appreciated, the solar panel can be situated vertically or horizontally depending on the desired needs of the system. It should be noted that although these dimensions are given, they are shown by way of example and not by way of limitation. Alternative dimensions may be used although preferably they are standard dimensions for example, metric dimensions may be used. In other applications, metric dimensions may be used.

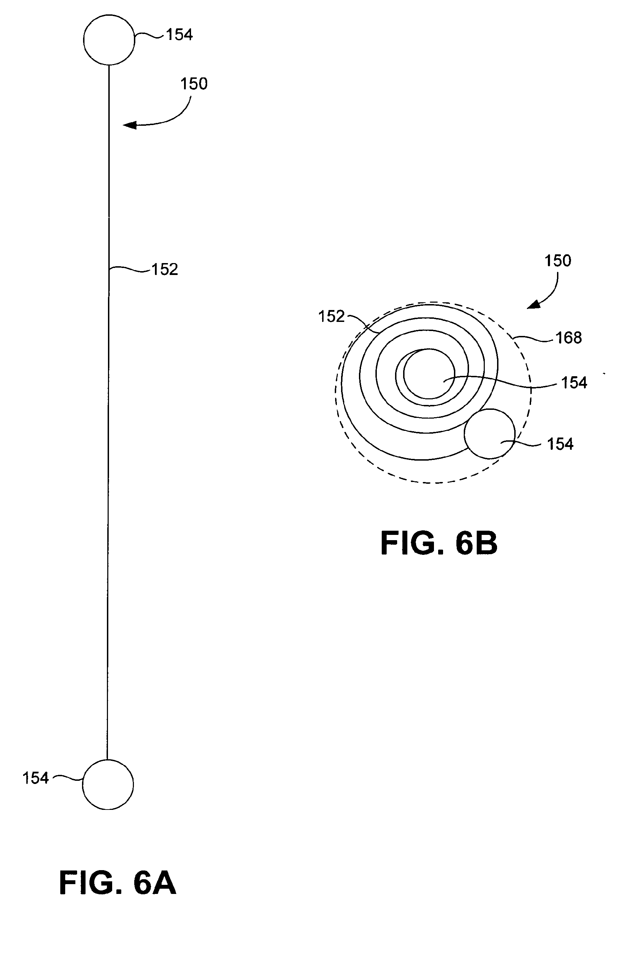

In accordance with one embodiment, the solar panel 150 is rolled up to form a more compact form for packaging. Fig. 6A is a diagram showing the solar panel 150 in an extended form as for example when its mounted on a roof, and Fig. 6B is a diagram showing the solar panel 150 rolled up and ready to be placed inside a box. As shown, in Fig. 6B, the absorber 152 is rolled around one of the headers 154 and the rolled bundle is secured with a strap 168 such as a rope, band, tie, and/or the like. If multiple panels are to be packaged, they can be stacked together and then rolled around the headers at one end and the rolled bundle can be secured similarly to a single panel without making much impact on the total packaged volume.

Fig. 7 is a diagram of a roof jack 170, suitable for use with one embodiment of the present invention. By way of example, the roof jack 170 may correspond to the roof jacks shown in Fig. 3. The roof jack 170 is configured to be placed over a roof penetration (e.g., a hole through the roof). The roof jack 170 includes a base flashing panel 172 over which roof shingles can be placed. The roof jack 170 also includes a hub 174 that extends above and seals off an opening in the base flashing panel 172. During installation of the roof jack 170, the opening/hub 174 is disposed over a roof penetration. The hub 174 includes a hole 176 through which a pipe or tube can be placed in order to enter the roof penetration. The diameter of the hole 176 is generally dimensioned to receive the piping therethrough. Furthermore, the hub 174 is designed to allow the piping enough space to bend through the roof penetration (without kinking). In one implementation, the roof jack 170 is low profile and therefore the hub 174 only extends less than 2 inches above the base flashing member 172. When the pipe is placed in the hole 176, the interface there between is sealed with a grommet in compression. The grommet may be formed from a variety of rubber and other materials including EPDM and nitrile

Although the shape of the hub 174 can be widely varied, in the illustrated embodiment, the hub 174 forms a semi-conical shape. The hole 176 is disposed in the bottom end of the conically shaped hub 174. The hole 176 is therefore situated perpendicular to the surface of the base flashing member 172 and thus the roof. The roof jack 170 can be formed from a variety of materials including plastic and sheet metal. In one implementation, the roof jack 170 is formed from galvanized steel sheet metal similar to other flashings.

It should be noted that the roof jack 170 can be configured to accommodate more than one pipe. For example, it can be configured with multiple holes - one for the hot pipe and one for the cold pipe. This type of roof jack 170 can be used when a single roof penetration is desired.

Fig. 8 is a simplified diagram of a tank adapter 180, in accordance with one embodiment of the present invention. The tank adapter 180 may for example correspond to the tank adapter shown in Fig. 3. The tank adapter 180 is configured to couple to a single connection point 182 while providing two different directional flows through the connection point 182. The single connection point 182 may for example be the hose bib connection of a conventional water heater. In most cases, the tank adapter 180 is generally composed of two conduit parts 184 and 186 that provide for different flows but still cooperate to work through one connection point 182. The conduit parts 184 and 186 can be separate parts that are attached together or they may be integrally formed (e.g., molded as a single part). Furthermore, the portion of the conduit parts 184 and 186 that intersect the single connection point 182 can be positioned coaxially or they may be juxtaposed while the opposite ends are typically separated so they can be coupled to other components.

As shown, a first conduit part 184 allows a first flow through the single connection point 182, and a second conduit part 186 allows a second flow through the single connection point 182. The flows may for example be associated with drawing and returning a fluid. In some cases, the conduits parts 184 and 186 are directed to specific directional flows - one for draw and one for return, while in other cases the conduits can be directed to either depending on the needs of the system. In some cases, one of the connection ends 187 extends further from the connection point than the other connection end 188. The ends opposite the connection point ends may include additional conduits as needed. By way of example, they may include a T or Y end.

In one embodiment, the tank adapter is formed as a small compact unit. For example, it may have a outer volume of less than about 22.5 cubic inches, and more particularly less than about 18 cubic inches, and even more particularly less than 8 cubic inches. It may also be configured with no dimension greater than 10 inches, more particular 8 inches, and even more particularly 6 inches.

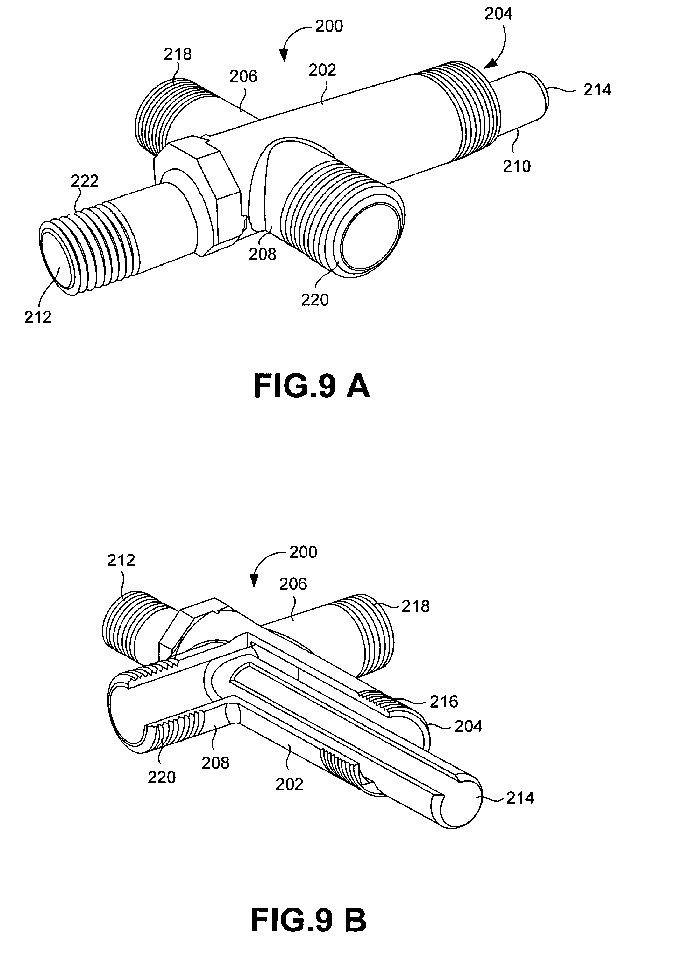

Figs. 9A-9B are various diagrams illustrating a compact tank adapter 200, in accordance with one embodiment of the present invention. The compact tank adapter 200 includes a central large diameter conduit 202 with one open end 204 and two side extending large diameter conduits 206 and 208 fluidly coupled to the central large diameter conduit 202 and extending from the side of the central large diameter conduit 202. The compact tank adapter 200 also includes a central small diameter conduit 210 that is disposed within the large diameter central conduit 202 and that runs substantially parallel with the axis of the central large diameter conduit 202. Unlike the central large diameter conduit 202, the central small diameter conduit 210 has two open ends 212 and 214 that extend out of the closed and open end 204 of the central large diameter conduit 202. The central small diameter conduit 210 is fluidly separated from the large diameter conduits 202, 206 and 208. The corresponding open ends 204 and 214 of the central small and large diameter conduits 210 and 202 are fluidly connected to the storage tank at a single connection point. The physical connection may be made via an external thread 216 located at the open end 204 of the central large diameter conduit 202 that mates with the hose bib opening in conventional storage tanks. External threads 218, 220 and 222 may also be disposed at the open ends of the side mounted large diameter conduits 206 and 208 as well as one end 212 of the central small diameter conduit 210 so that hose and hose bib connections can be made. For example, the hose bib can be moved to one of the two side mounted large diameter conduits 206, and hoses can be attached to the other side mounted large diameter conduit 208 and the central small diameter conduit 210.

In one example, cold water is pulled through the central small diameter conduit 210 via a hose that couples to the inlet of a heat exchanger, and warm water is returned through the side mounted large diameter conduit 208 via a hose that couples to the outlet of the heat exchanger. Of course the flows can be reversed if needed.

In one embodiment, the size of the threads of the small diameter conduit 210 is different than the size of the threads of the large diameter conduits 202, 206 and 208 in order to help prevent a potential mismatch of hoses when the system is being connected to the heat exchanger. The inlets and outlets of the heat exchanger are also configured to follow this same configuration. By way of example, the central small diameter conduit includes a ½ " thread while all other open conduits include ¾" threads.

In one embodiment, the central large diameter conduit has a length that allows it to reach through the insulation wall of water heater thereby making installation easier.

In one embodiment, the cross sectional areas through the various conduits and tubes are configured so as not to restrict flow. In one example, the cross sectional area of the central small diameter tube is substantially similar to the remaining cross section area of the central large diameter tube at its open end. Generally speaking, the sizes of the passageways are balanced to provide smooth flows.

In one embodiment, the central small diameter tube is placed against the wall of the central large diameter tube (as shown). Alternatively, the central small diameter tube may be spaced away from the wall of the central large diameter conduit. For example it may be disposed along the axis of the central large diameter tube or alternatively it can be off axis such that it is skewed to one side. If spatially separated, the central small diameter tube may be located using fins or it simply may be supported at the other end of the closed end of the central large diameter conduit.

In accordance with one embodiment, the tank adapter 200 is formed as a single integral part. By way of example, the tank adapter 200 may be formed from plastic via an injection molding process. In one implementation, 40% glass filled polyphenylene sulfide is used. This material can be used for potable water (NSF61), its rigid enough for threads, it can withstand high surface temperatures (greater than 160 F), its ductile enough to prevent breakage, and further it is suitable for injection molding. One example of this material is Ryton. Of course, other materials may also be used. By way of example, PEX, CPVC, Polypropylene and/or similar materials may be used.

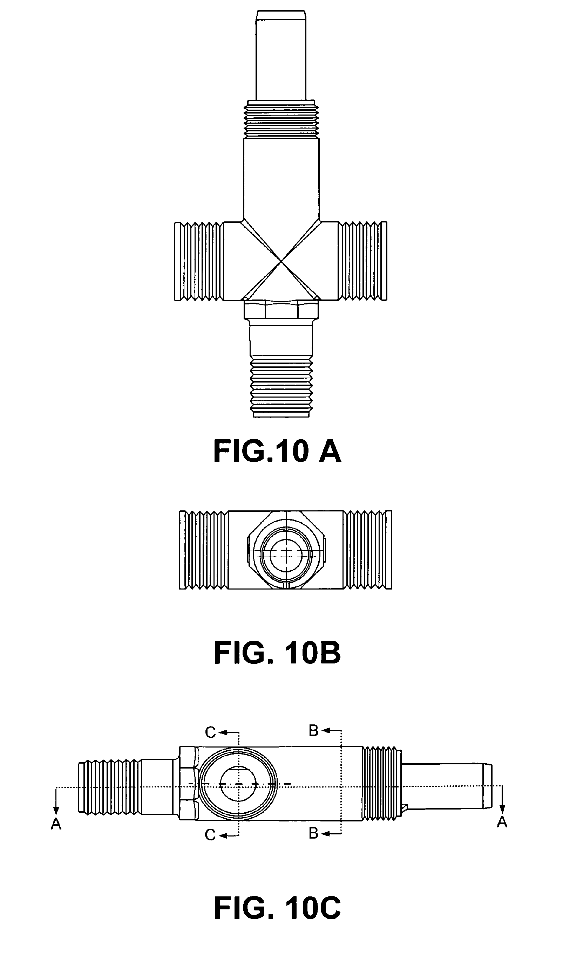

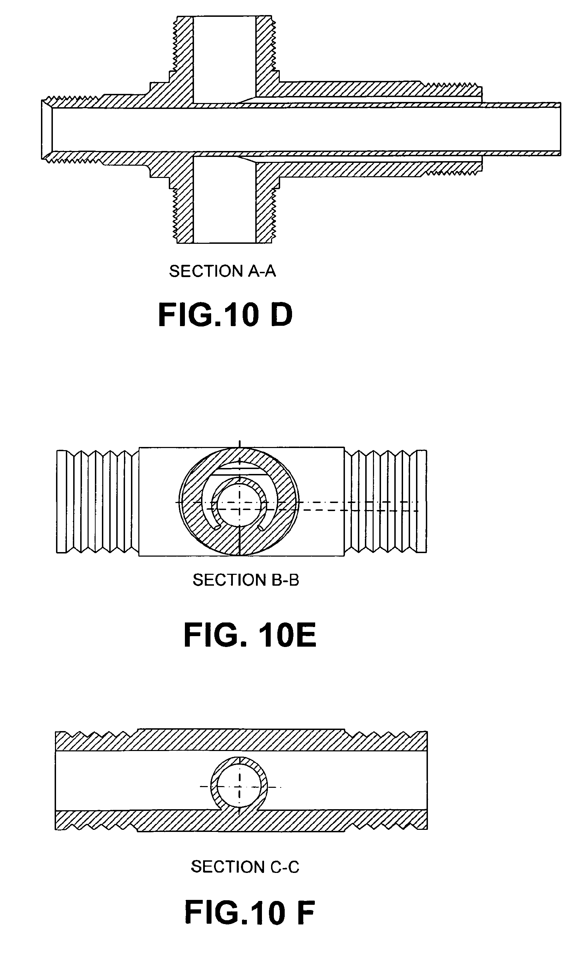

Figs. 10A-10F show various views of a tank adapter, in accordance with one embodiment of the present invention. Dimensions are shown by way of example and not by way of limitation. As can be appreciated by the dimensions, the tank adapter is small and very compact.

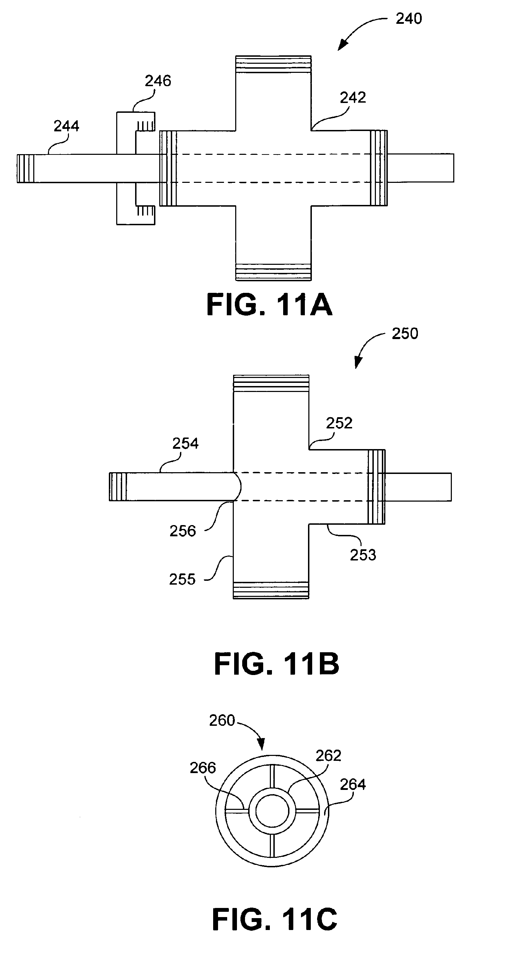

Figs 11A-11C shows various alternate embodiments of the tank adapter. Figs. 10A and 10B show a tank adapter formed from two parts. In Fig. 10A, the tank adapter 240 includes a 4 way conduit member 242 each with threaded ends, and a tube 244 with a threaded cap 246 disposed at its periphery proximate one of its ends. The cap 246 includes an internal thread for connecting to one of the outer threaded ends of the 4 way conduit 242. The cap 246 is configured to seal the end off except for the passageway that extends through the tube 244. The tank adapter 240 is formed by inserting the tube 244 entirely through one of the two longitudinally extending and oppositely placed conduits of the 4 way conduit member 242, and threading the cap 246 onto the closest threaded conduit that is opposite the end where the tube 244 extends out.

In Fig. 11B, the tank adapter 250 is formed by providing a 3 way conduit member 252 (T shape) each with threaded ends, and inserting a tube 254 through the passageway of the central conduit member 253 and through the wall 255 opposite the opening of the central conduit member 253. The tube 254 may for example be placed within a hole 256 and thereafter sealed, glued, soldered or otherwise fixed to the 3 way conduit member 252.

In Fig. 11C, the tank adapter 260 includes an inner tube 262 that is spaced apart from the outer conduit member 264 via one or more fins 266. The tube 262 can be centered on the axis of the outer conduit member 264 (as shown) or it may be offset from the axis of the outer conduit member 264.

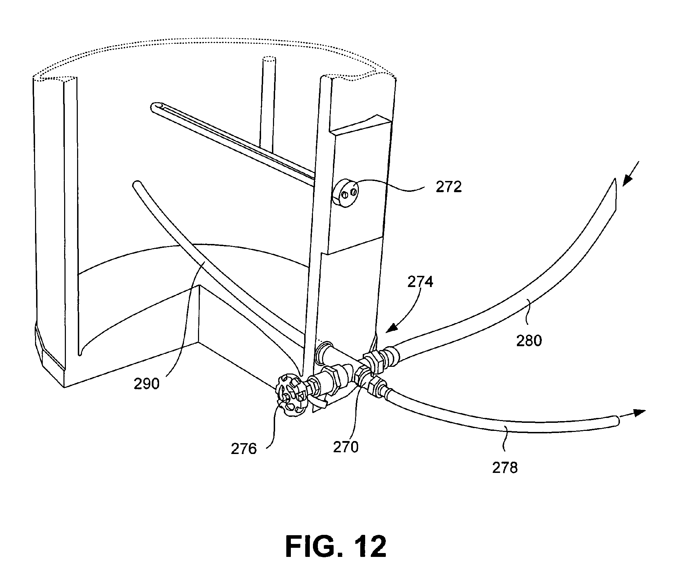

Fig. 12 is a diagram showing a tank adapter 270 coupled to a hot water heater 272, in accordance with one embodiment of the invention. The tank adapter 270 may for example correspond to any of those previously described. As shown, the double inlet/outlet of the central conduit of the tank adapter is coupled to the hot water tank at the conventional hose bib connection point 274. The double inlet/outlet of the tank adapter may for example be threaded into the threaded opening of the hot water heater using a wrench. The hose bib 276 has been removed from the tank 272 and reconnected to one of the side mounted large diameter conduits. Furthermore, a first pump hose 278 is connected to the central small diameter conduit, and a second pump hose 280 is connected to the remaining side mounted conduit. The water inside the tank 272 is drawn through the central small diameter conduit and through the first pump hose 278 to the cold inlet of a heat exchanger. The water is reintroduced into the hot water heater 272 through the second pump hose 280, the side mounted conduit and finally through the central large diameter conduit.

In one embodiment, the central small diameter conduit includes a dip tube 290 that is either integrally formed therewith or that has been coupled thereto. The dip tube 290 is a long slender tube that extends into the hot water heater 272 above the hose bib connection point 274. The dip tube 290 is configured to pipe water from some distance inside the hot water heater 272 (extends the intake past the centerline of water heater and from higher locations within the hot water heater). The dip tube 290 may for example extend halfway into the storage tank 272. The addition of the dip tube 290 is believed to improve performance of the system by allowing water to be pulled from a more central location than at locations proximate the bottom of the tank 272 where harmful particles may rest. The dip tube 290 may be configured to draw water from 8" to about 18" above the tank bottom to prevent sucking in dirt, silt, and other precipitates.

The tube 290 may be formed from a flexible material in order to help in placing it inside the tank 272. This is in part due to the domed section inside conventional water heaters 272. A rigid tube must be forced and sometimes doesn't work at all. The flexible dip tube 290 tends to flex and bend as needed very easily (slide upward against the dome section). In one embodiment, the tube 290 is configured with a density of less 1 gram/cc. If density of tube is less than 1 gram/cc then the tube 290 tends to rise or float upward once inside the tank 272. The length of the tube 290 can therefore be used to position the end of the tube 290 in the desired location within the storage tank 272. In one embodiment, the dip tube 290 is formed from polymers and more particularly from polyolefins. In one implementation, the tube 290 is formed from polyethylene. In another implementation, the tube is formed from PEX tubing. In another implementation, the tube is formed from polypropylene.

It is also believed that having a dip tube 290 at higher locations within the tank 272 may promote mixing of the water contained inside the tank 272. By drawing heated water, and inserting new warm water, it is believed that a stirring effect can be created. As should be appreciated, the incoming hot water tends to migrate to the upper portion of the storage tank, while the colder water already inside the storage tank tends to migrate to the lower portion of the tank. That is, the hot water flowing out of the tank adapter rises to the top of the storage tank since its lighter than the water currently in the storage tank and the heavier cold water already in the storage tank falls to the bottom of the storage tank. Without this stirring effect, the hottest water in the upper region of the storage tank would be drawn out. As a result, the system may run out of hot water more quickly or only provide lukewarm water when draws are taken.

Fig. 13 is a perspective diagram of a drain back tank 300, in accordance with one embodiment of the present invention. The drain back tank 300 is configured to be a holding tank for the collection loop. It also allows fluid in the collector to drain in order to prevent freezing. In accordance with one embodiment, the drain back tank 300 is formed form a plastic materials. For example, it may be formed from any of those plastic materials already mentioned. In one particular embodiment, the drain back tank 300 is formed from polypropylene, which has a higher service temperature than polyethylene. In one example, the polypropylene tank is blow molded. Because the tank 300 is formed from plastic, and due to its volume, the tank 30 may include one or more support members 302 between front and back walls of the tank 300. The support members 302 help prevent the holding tank from collapsing and bowing due to the weight of the fluid contained therein. The support members 302 may be internally located or they may form a portion of the external enclosure.

In the illustrated embodiment, the drain back tank 300 includes a pair of support cylinders 302 disposed through the tank 300. The support cylinders 30 are part of the external structure of the front wall that bends back and structurally connects to the back wall. The cylinders 302 may form a hole through the tank or they may form a void with the back wall of the tank. The drain back tank 300 may also include an inlet at the top wall and an outlet at the bottom wall of the tank. The inlets/outlets306 may include standard fittings for receiving the pipes. The drain back tank 300 may further include a vented cap 310, which can serve as a location for adding more fluid into the collection loop. The drain back tank 300 may also include an external level indicator 312.

In one embodiment, the drain back tank 300 is wall mountable. As such, it can be designed with support brackets integral with the enclosure (part of molding). The support brackets may for example be configured to receive the heads of screws or bolts which are fixed to a wall. Alternatively, the back wall of the enclosure in the void formed by the cylinders 302 may include through holes for mounting the drain back tank to the wall with screws or bolts (e.g., lag bolts). The dimensions of the tank can be widely varied. In one example, the tank has dimensions less than 36x12x6 inches, and more particularly about 31x12x5.6 inches. In another example, the drain back tank can be configured to hold about 10 gallons.

Fig. 14 is a diagram of a circulation module 320, in accordance with one embodiment of the present invention. By way of example, the circulation module 320 may be used in the system shown in Fig. 3. The circulation module 320 integrates various control components into a single unit. The circulation module 320 includes a heat exchanger 322, a first pump 324, a second pump 326 and related piping that is disposed inside a compact enclosure 328. If needed, the circulation module 320 may include electronic components as well as a power supply that powers both pumps from a single power cable (120 AC).

The heat exchanger 322 includes a set of inlets and outlets for the collection side and a set of inlets and outlets for storage side. When the fluid on the collection side of the heat exchanger 322 is hotter than the fluid on the storage side of the heat exchanger 322, the heat is transferred to the fluid inside the storage side of the heat exchanger 322 and this heated fluid is circulated into the storage tank. The inlets and outlets may be ¾ solder connections.

Although the heat exchanger 322 can be widely varied, in the illustrated embodiment, the heat exchanger 322 is a corrugated plate design that supports high fluid flow through the unit. This type of design along may help to suspend any particles in the system and minimize the scaling effect. As should be appreciated, scaling is a natural phenomenon that exists predominantly in operations involving laminar flows at high temperatures (e.g., over 140 F). The corrugated plates may for example be stainless steel with copper brazing. The heat exchanger 322 is generally configured to be a compact unit that provides a significant amount of heat exchanger surface area to total volume of the heat exchanger 322. Thus, the heat exchanger 322 can be made smaller and lighter which is better for packaging. In one example, the ratio of surface area to volume is greater than 50, and more particularly around 57.6. By way of example, the heat exchanger may provide about 1.2 square feet of surface area with a volume of about 0.21 cubical feet (e.g., 3 in. x 8 in. x 1.5 in.). Furthermore, this can all be accomplished with a weight of about 3 Ibs. Alternatively, the heat exchanger 322 may be a coil design. The heat exchanger 322 may be double walled to prevent contamination between the two loops.

The pumps 324 and 326 are connected to the inlets and outlets of the heat exchanger 322 via pipes. The pipes may for example be copper pipes, but may also be plastic pipes to reduce weight and cost. The other side of the pumps 324 and 326 may be configured to various fittings for ease of installation. On the collection side, the cold outlet pipe of the heat exchanger 322 is typically coupled to a first end of the first pump 324, and the cold circulation piping of the system is connected to the other end of the pump 324. In addition, the hot circulation piping of the system is connected to the hot inlet pipe. On the storage side, the cold inlet pipe of the heat exchanger 322 is coupled to a first end of the second pump 326, and the other end of the pump 326 is coupled to the cold outlet of the storage tank via some piping (e.g., PEX tubing or copper). Furthermore, the hot outlet pipe of the heat exchanger 322 is connected to the hot inlet of the storage tank via some piping (e.g., PEX tubing or copper). The various inlets and outlets of the module 320 may include fittings appropriate to the type of piping used. For example, on the collection side, the inlet and outlet of the module 320 may include push fittings for coupling to PEX tubing. Also by way of example, on the storage side, the inlet and outlet of the module 320 may include threads for receiving the ends of conventional flexible plumbing pipe.

By way of example, the pumps may run at about 1/25 hp and range between a maximum FT head of 6,6 to about 34.8, a maximum GPM between 7 to about 8, maximum Watts between about 25 to about 135, a maximum weight between about 6 Ibs to about 7.25 lbs.

The enclosure 328 is configured to surround and protect the components of the module 320 as well as to provide a clean nice looking aesthetical appearance for the module 320. Although various materials may be used, in the illustrated embodiment, the enclosure 328 is formed from plastic. By way of example, the enclosure 328 may be formed via an injection molding operation. The plastic material may be widely varied. In one example ABS plastic is used. In another example, 30% fiberglass/mineral reinforced homopolymer polypropylene may be used.

In one embodiment, the enclosure 328 is embodied as a two piece design having a first member 330 and a second member 332 that come together to form the overall enclosure 328. This two part design allows for installation of the heat exchanger 322 and pumps 324 and 326. It may include locking tabs or snaps 334 for releasably attaching the two halves together. It may also include various holes 336 through which the inlets and outlets emanating from the heat exchanger 322 and pumps 324 and 326 are disposed. By having these external to the housing, installers can easily make the appropriate connections without opening the enclosure. The enclosure 328 may also include vents 338 to prevent pump overheating. Although not shown, the enclosure 328 may further include a foam base to encapsulate the heat exchanger 322 and help hold the assembly inside the enclosure 328.

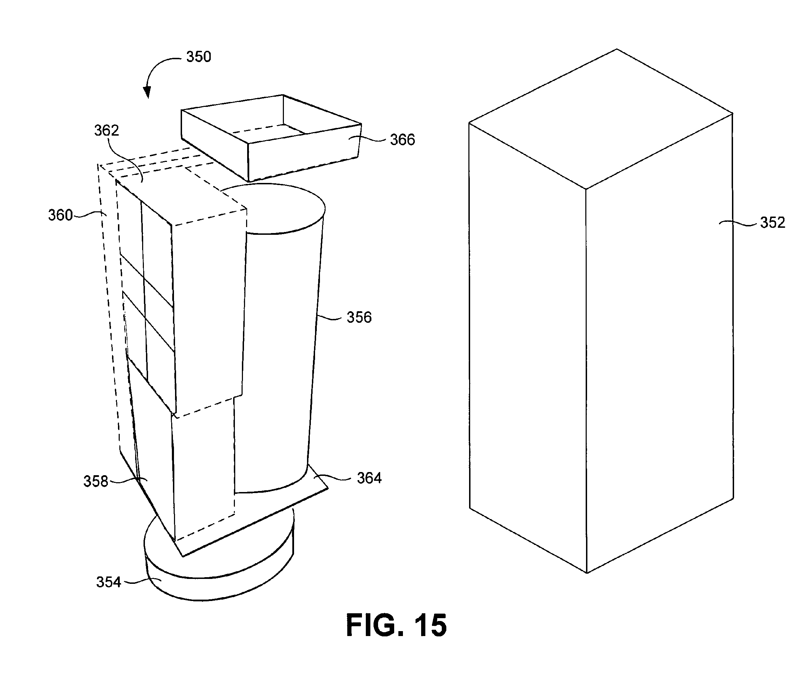

Fig. 15 is a diagram of a packaging arrangement 350 for a solar system kit, in accordance with one embodiment of the present invention. The packaging arrangement 350 may, for example, be used to package the system kit shown in Fig. 3. The packaging arrangement 350 is configured to fit in an outer box 352 that conforms to the size requirements associated with the OS2 shipping standard. The weight of the packaging arrangement 350 in addition to the outer box 352 are configured to conform to the weight requirements associated with OS2 shipping standard. For example, the combined length and girth of the box exceeds 108 inches and actual weight of everything box included is less than 70 pounds. The volume of the box may also be widely varied, by way of example, boxes having volumes of less than about 20-25 cubic feet (e.g. less than approximately 0.7 cubic meters) as for example in the range of approximately 13-18 cubic feet have been found to work well. In one particular application, a box having dimensions of 22-1/2" x 20-1/4" x 58-1/2" has been used. However, it should be appreciated that the size of the box may be widely varied. The important factor is that the box be sized so that it can be readily shipped at low costs using standard carriers. In the illustrated embodiment, the total weigh of box and its contents is less than approximately 70 pounds. Although this is generally preferred, in alternative embodiments heavier boxes may be used. With current shipping standards, weights of no more than 100 pounds are generally preferred, with weights less than 90 pounds (OS3) and 70 pounds (OS2) being generally more preferred.

As shown, the packaging arrangement 350 may include one or more sets of flexible tubing 354 that is rolled up into a compact form. Because the piping is rolled up, the ratio of piping distance to packaged volume is significantly increased.

The packaging arrangement 350 may also include one or more solar panels 356 that are rolled up into a compact form. If multiple panels are supplied, then the panels 356 can be stacked and rolled up together with little impact on total size. Because the panels 356 are rolled up, the ratio of collector area to packaged volume is significant increased. The solar panels 356 may for example correspond to the solar panel shown in Figs. 4-6.

The packaging arrangement 350 may also include a circulation module 358 that is packaged in a separate "inner" box that is placed within the main or "outer" box. The separate inner box helps support the circulation module 358 in the outer box. This box may also include any parts associated with the circulation module 358 as for example a controller, temperature sensors, wires, pump hoses, etc. The circulation module 358 may for example correspond to the circulation module shown in Fig. 14.

The packaging arrangement 350 may also include a drain back tank 360 that is packaged in a second separate inner box. The second separate inner box helps support the drain back tank 360 in the outer box. This box may also include any parts associated with the drain back tanks 360 as for example inlet and outlet fittings, vent caps, drain tube, and mounting hardware, etc. The drain back tank 360 may for example correspond to the solar panel shown in Fig. 13.

The packaging arrangement 350 may also include various accessories 362 that are packaged in one or more additional inner boxes. In one embodiment, multiple stacked boxes are used. In another embodiment, a single box is used. In either case, each set of accessories 362 is typically packaged in its own packaging such as plastic bags or boxes. In fact, in order to make assembly easier, the accessories 362 may be packaged together according to a specific assembly task. The accessories 362 can be selected from fittings, valves, tools, hoses, mounting hardware, tape, sealants, sealers, roof jack, and the like. The accessories 362 can also be selected form any of the accessories needed for tubing, solar panels, control module, and drain back tank.

In one example, the circulation module is placed inside its own inner box, the drain back tank with fittings, caps and drain tube are placed in their own inner box, and the remaining accessories are placed in the accessory box. The accessories may for example include fittings, tubing cutter, valves, hoses, controller, roof jack, tape, manual, sealer, and the like.

The packaging arrangement 350 may also include various dividers 362 and fillers 364 to keep the internal boxes from moving or shifting during shipping. By way of example, the packaging arrangement 350 may include one or more void fillers or divider pads.

The packaging arrangement 350 may be assembled as follows. The rolled up piping 354 may be placed at the bottom of the outer box 352. A divider panel 362 may be placed over the piping 354 to provide a floor for the remaining components. The circulation module and drain back tank boxes 358 and 360 may be placed on the divider panel 362, and the accessory box 362 can be placed on the circulation module box 358. Furthermore, the rolled up solar panels 356 can be placed in the remaining volume, and a top void filler 366 can be placed over the solar panels 356. Thereafter, the box 352 can be sealed.

In one embodiment, the outer box has a size of about 22-1/4" x 20" x 39-7/8." The piping as a size of about 20" x 20" x 5." The circulation module box has a size of about 12-1/2" x 8-1/4" x 16-314." The drain back tank box has a size of about 8" x 20" x 34-3/4. The accessories box has a size of about 14" x 8" x 18." The solar panels (which may, for example be 2' by 12', have a rolled up size of about 14" x 14" x 30." Furthermore, the divider may have a size of about 22-1/4" x 20" x 1-4, " and the top void filler may have a size of about 14" x 12" x 4-3/4."

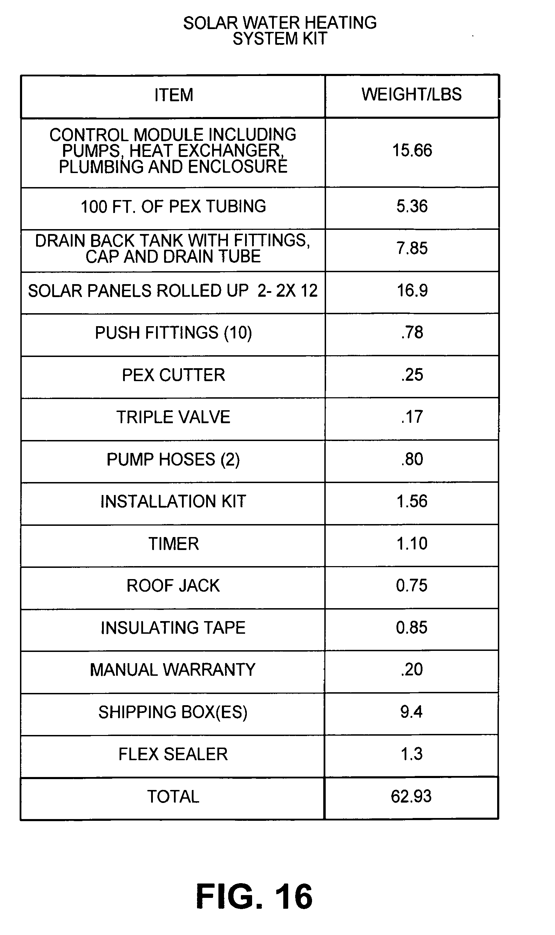

Fig. 16 is a chart showing a parts list for a solar system kit, in accordance with one embodiment of the present invention. The parts list may for example correspond to the solar system kit shown in Fig. 3. Furthermore, the parts may be packaged according to the packaging arrangement shown in Fig. 16. As shown, the kit weighs in less than 70 pounds and therefore it can be shipped using the OS 2 standard.

While this invention has been described in terms of several preferred embodiments, there are alterations, permutations, and equivalents, which fall within the scope of this invention. It should also be noted that there are many alternative ways of implementing the methods and apparatuses of the present invention. It is therefore intended that the following appended claims be interpreted as including all such alterations, permutations, and equivalents as fall within the true spirit and scope of the present invention.

## Claims

1. A solar water heating kit packaged in a single shipping box that has a weight that is not greater than 45 kilograms, the kit comprising:
at least one flexible solar collector panel having a pair of header pipes, the at least one flexible solar collector panel(s) having a cumulative collector surface area of at least 2 square meters;
an interface module that includes a heat exchanger; and
a piping system for coupling the solar panel to the interface module, and for coupling the interface module to a storage tank that is not part of the kit, wherein the piping system includes at least 13 meters of flexible tubing.

2. A solar water heating kit packaged in a single shipping box that has a volume that is not greater than 0.7 cubic meters and a weight that is not greater than 45 kilograms, the kit comprising:
at least one flexible solar collector panel, the at least one flexible solar collector panel(s) having a cumulative collector surface area of at least 4 square meters;
at least 15 meters of flexible tubing;
a tank adapter suitable for coupling the flexible tubing to a water storage or water heating tank.

3. A solar water heating kit as recited in claim 1 or 2 wherein the kit further comprises instructions for assembling a solar water heating system and the kit contains all of the necessary components for the solar water heating system.

4. A solar water heating kit as recited in any of the preceding claims wherein the single shipping box has a volume that is not greater than 0.7 cubic meters and conforms with at most an OS3 shipping standard.

5. A solar water heating kit as recited in any of the preceding claims wherein the single shipping box conforms with an OS2 shipping standard.

6. A solar water heating kit as recited in any of the preceding claims further comprising a pump and a control unit suitable for controlling operation of a solar water heating system that can be formed from the solar water heating kit.

7. A solar water heating kit as recited in claim 6 further comprising a second pump, wherein the heat exchanger and the first and second pumps are all incorporated into a single unit, wherein the first and second pumps are suitable for circulating fluids through different circulation loops.

8. A solar water heating kit as recited in any of the preceding claims further comprising a drain back tank suitable for holding a sufficient quantity of water to drain the collector panel.

9. A solar water heating kit as recited in any of the preceding claims wherein the kit includes at least two solar collectors that have a combined surface area of at least 40 square feet and the piping system includes at least 20 meters of flexible tubing, the kit further comprising a plurality of push fitting connectors for coupling the flexible tubing to other components of the solar water heating system.

10. A solar water heating kit as recited in any of the preceding claims wherein the flexible solar panel is rolled around a header pipes within the shipping box.

11. A solar water heating kit as recited in any of the preceding claims further comprising a tank adapter suitable for coupling the solar heating system to a domestic water heating tank, wherein the tank adapter comprises an integrally formed plastic body having at least first, second and third connection points and first and second fluid conduit passages that are fluidly separated, wherein the first and second conduit passages both open through a first connection point that is adapted to mate with a single tank port, the first conduit passage additionally opens at the second connection point, and the second conduit passage additionally opens at the third connection point.

12. A tank adapter, comprising an integrally formed plastic body having at least first, second and third connection points and first and second fluid conduit passages that are fluidly separated, wherein the first and second conduit passages both open through a first connection point that is adapted to mate with a single tank port, the first conduit passage additionally opens at the second connection point, and the second conduit passage additionally opens at the third connection point.

13. A tank adapter as recited in claim 11 or 12 wherein the second conduit passage opens substantially at the first connection point, the tank adapter further comprising an extension tube that is fluidly coupled to the first conduit passage and extends beyond the first connection point so that when the tank adapter is coupled to a tank, the inlet of the second conduit passage is substantially at the first connection point and the outlet of the first conduit passage may be positioned within the tank at a location that is physically separated from the inlet of the second conduit passage.

14. A tank adapter as recited in claim 13 wherein the extension tube extends at least 25 cm inches beyond the first connection point so that when the tank adapter is coupled to a tank, the first conduit passage may be positioned within the tank at a location that is physically separated from the inlet of the second conduit passage by a distance of at least 25 cm.

15. A tank adapter as recited in claim 13 or 14 wherein the extension tube is integrally formed with the plastic body.

16. A tank adapter as recited in claim 13 or 14 wherein the extension tube is not integrally formed with the plastic body.

17. A tank adapter as recited in any of claims 11-16 wherein the overall outer volume of the compact tank adapter is less than approximately 350 cm³

18. A tank adapter as recited in any of claims 11-17 wherein none of the dimensions of the compact tank adapter are greater than approximately 20 centimeters.

19. A tank adapter as recited in any of claims 11-18 wherein:
the tank adapter has four arms that extend along two substantially perpendicular axes such that the tank adapter substantially has a "t" shape;
the first conduit path extends substantially through first and second arms of the tank adapter along a first axis;
the second conduit path extends through the first arm and a third arm partially that is perpendicular to the first arm; and
wherein the tank adapter further comprising a third passage in fluid communication with the second passage, the third passage being arranged to extend through a fourth arm of the tank adapter.
